# EUROPEAN PATENT SPECIFICATION

(11) **EP 4 023 881 B1**
(45) Date of publication and mention of the grant of the patent: **25.10.2023**
(21) Application number: 20869766.4
(22) Date of filing: 02.01.2020
(51) Int. Cl.: F03D 13/20, F03D 80/80, E04H 12/20, E04H 12/34

(54) **GUYED TOWER, WIND POWER GENERATOR SET AND CONNECTING DEVICE**
ABGESPANNTER TURM, WINDKRAFTANLAGE UND VERBINDUNGSVORRICHTUNG
MÂT HAUBANÉ, ENSEMBLE GÉNÉRATEUR ÉOLIEN ET DISPOSITIF DE RACCORDEMENTa

(30) Priority: 27.09.2019 CN 201910934276
(43) Date of publication of application: 06.07.2022
(73) Proprietor: Beijing Goldwind Science & Creation Windpower Equipment Co., Ltd., Beijing 100176 (CN)
(72) Inventor: CUI, Yufei, Beijing 100176 (CN); ZHANG, Ke, Beijing 100176 (CN); LI, Qiang, Beijing 100176 (CN)
(74) Representative: Gulde & Partner
(86) International application number: PCT/CN2020/070134
(87) International publication number: WO 2021/056923

(56) References cited:
- WO-A1-2015/032853
- WO-A1-2015/032853
- AU-A4- 2013 100 186
- CN-A- 105 179 183
- CN-A- 106 894 668
- CN-A- 106 968 893
- CN-A- 108 506 169
- CN-U- 206 190 456
- US-A1- 2018 003 158
- US-A1- 2019 234 096

## Description

### TECHNICAL FIELD

The present application relates to the technical field of wind power.

### BACKGROUND

With the rapid development of the wind power industry, high towers have gradually become the trend of development. A guyed tower can meet the needs of increasing the height of the tower without increasing the weight of the tower, and meet the needs of the market due to its excellent performance and have a very broad application prospect. As the height of the tower increases, the cost of production, transportation and installation of the tower also increases. The guyed tower is widely used because of its unique structural properties, which can improve the overall stress of the tower.

However, in the guyed tower in the related art, a lug are usually welded at an outer peripheral side wall of a tower tube section to connect a guy and a tower body. Although this arrangement can meet the requirement of the connection between the guy and the tower body, it also has the disadvantages of difficult connection of the lug, inconvenient replacement and inconvenient maintenance, so that it is not conducive to the comprehensive promotion of the guyed tower.

Therefore, there is an urgent need for a new guyed tower, a wind power generator set and a connecting device.

WO 2015/032853 A1 provides a tower assembly for supporting a wind turbine including a concrete tower portion. The concrete tower portion has two or more concrete tower segments arranged upon each other. The tower assembly further includes a supporting means capable of receiving bending loads from said concrete tower portion. The supporting means is connected to the concrete tower portion at a predetermined height and it sticks to the ground at a pre-determined distance from the concrete tower portion.

US 2019/0234096 A1 provides a wind turbine system. The wind turbine system includes a wind turbine generator having a rotor and a nacelle mounted atop a tower structure. The tower structure is mounted to a foundation structure and includes a plurality of tower sections. The wind turbine system further includes connector rings. Each of the connector rings is disposed proximate two adjacent tower section flanges. The wind turbine system further includes a plurality of tensioned cables, with each coupled to one of the pad eye adaptors at a first end and the foundation structure at a second end.

AU 2013/100186 A4 provides a guy bracket. The guy bracket includes a member having a first face and a second opposite face. First and second holes respectively are formed in the member and open at their respective opposite ends on each of the faces. Each of the ends of the first hole is chamfered so as to have a maximum diameter at the faces respectively. The second hole is chamfered at an end so as to have a maximum diameter at the first face.

### SUMMARY

The present application relates to a guyed tower and a wind power generator set.

In one aspect, the present application relates a guyed tower according to claim 1.

In another aspect, the present application provides a wind power generator set according to claim 13.

Byarranging a connecting assembly and defining the connecting assembly to include the fixing portion and the mounting portion distributed in sequence and arranged to be intersected with each other, each of the guys of the guyed assembly can be connected to the tower body through the mounting position on the mounting portion and can meet the requirement of the connection. At the same time, by defining two adjacent end flanges to together clamp and hold at least part of the fixing portion and be detachably connected to the fixing portion, it can meet the requirement of the connection between each connecting device of the connecting assembly and the tower body, and it is convenient for the connection, replacement and maintenance between each connecting device and the tower body, so that it is beneficial to the comprehensive promotion of the guyed tower, thereby improving economic benefits.

### BRIEF DESCRIPTION OF THE DRAWINGS

Features, advantages, and technical effects of exemplary embodiments of the present application will be described below with reference to the drawings.
Fig 1 shows a schematic structural view of a wind power generator set according to the present application ;
Fig. 2 shows a partial structural schematic view of a guyed tower according to the present application;
Fig. 3 shows a schematic structural view of a connecting device;
Fig. 4 shows a schematic structural view of a connecting device;
Fig. 5 shows a schematic assembly view of a cooperation of a connecting assembly, a reinforcement assembly and an end flange;
Fig. 6 shows a schematic structural view of an end flange;
Fig. 7 shows a schematic assembly view of a connecting assembly, a spacer block and an end flange;
Fig. 8 shows a schematic structural view of a spacer block;
Fig. 9 shows a schematic structural view of a guyed tower according to another embodiment of the present application;
Fig. 10 shows a schematic assembly view of a connecting assembly, an adapter member and an end flange;
Fig. 11 shows a schematic structural view of a reinforcement assembly of the present application;
Fig. 12 shows a schematic view of a force direction of a guyed assembly according to the present application.

Herein,
1. guyed tower;
10. tower body; 11. tower tube section; 111. end flange; 111a, flange hole; 111b. first opening groove;
20. connecting assembly; 21. connecting device; 211. fixing portion; 211a. first surface; 211b. second surface; 211c. first connecting hole; 222. mounting portion; 222a. third surface; 222b. fourth surface; 222c. mounting position; 223. position-restricting portion; 224. second connecting member;
30. guyed assembly; 31. guy; 32. hinged head;
40. reinforcement assembly; 41. central fixing member; 42. anti-deformation member; 421. first connecting member; 43. locking portion;
50. spacer block; 51. second connecting hole;
60. adapter member; 61-second opening groove; 62-third connecting hole;
X. axial direction; Y. circumferential direction; Z-radial direction; M-length direction; N-thickness direction;
2. wind power generator base; 3. nacelle; 4. impeller; 401. hub; 402. blade.

In the drawings, a same portion is given the same reference numeral. The drawings are not drawn to actual scale.

### DETAILED DESCRIPTION

Features of various aspects and exemplary embodiments of the present disclosure will be described in detail below. In the following detailed description, numerous specific details are set forth in order to provide a comprehensive understanding of the present application. However, it will be apparent to those skilled in the art that the present application may be practiced without some of these specific details. The following description of the embodiments is merely to provide a better understanding of the present application by illustrating examples of the present application. In the drawings and the following description, at least some well-known structures and techniques are not shown in order to avoid unnecessarily obscuring the present application; furthermore, the dimensions of some of the structures may be exaggerated for clarity. In addition, the features, structures or characteristics described below may be combined in any suitable manner in one or more embodiments.

The orientation words appearing in the following description are all directions shown in the drawings, and are not intended to limit the specific structures of a guyed tower, a wind power generator set and a connecting device of the present application. In the description of the present application, it should also be noted that, unless otherwise expressly specified and limited, the terms "mounting" and "connection" should be understood in a broad sense, for example, it may be a fixed connection or a detachable connection, or integral connection, either direct connection or indirect connection. For those skilled in the art, the specific meanings of the above terms in the present application can be understood according to specific circumstances.

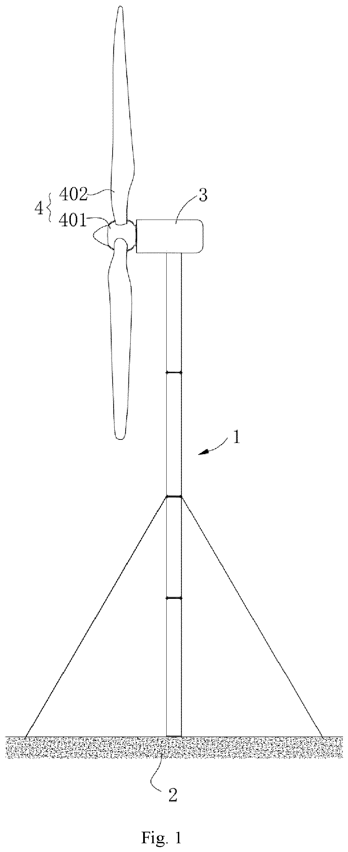

For a better understanding of the present application, the guyed tower and the the wind power generator set according to the embodiments of the present application will be described in detail below with reference to Figs. 1 to 12.

Referring to Fig. 1, the embodiments of the present application provides the wind power generator set, including a wind power generator base 2, a guyed tower 1, a nacelle 3, a generator and an impeller 4. The guyed tower 1 is connected to the wind power generator base 2, and the nacelle 3 is arranged on the top of the guyed tower 1, the generator is arranged at the nacelle 3, and may be located inside the nacelle 3, or may of course be located outside the nacelle 3. The impeller 4 includes a hub 401 and a plurality of blades 402 connected to the hub 401, and the impeller 4 is connected to a rotating shaft of the generator through the hub 401. When the wind power acts on the blades 402, the entire impeller 4 and the rotating shaft of the generator are driven to rotate, thereby meeting the power generation requirement of the wind power generator set.

It can be seen from the above structure of the wind power generator set that heavy equipment such as the nacelle 3, the generator and the impeller 4 and the like are supported above the guyed tower 1; when a height of the wind power generator set is higher or the power of the wind power generator set is greater, there are higher requirement on the strength and safety performance of the guyed tower 1.

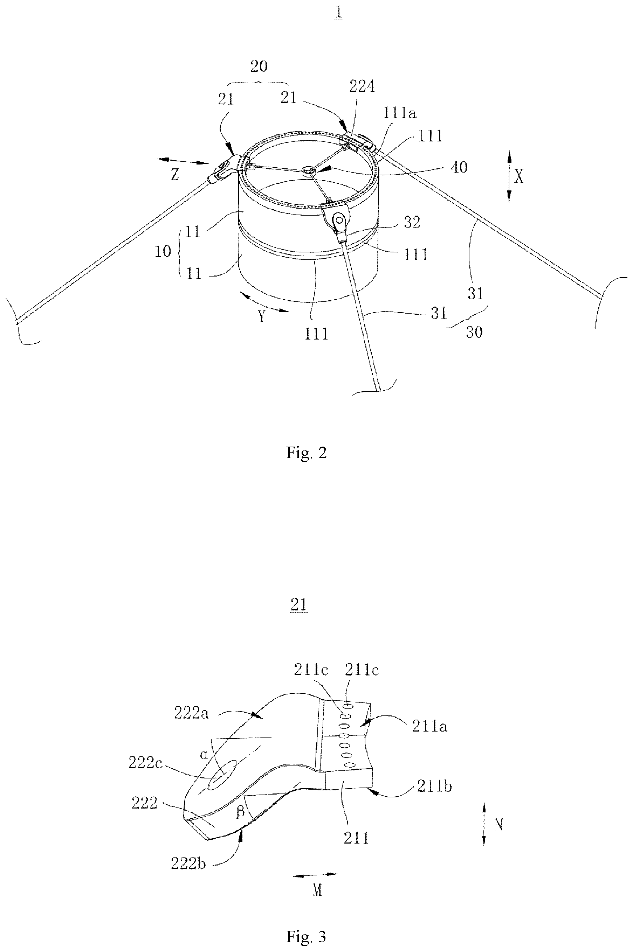

Referring to Fig. 2 to Fig. 3 together, in order to better meet the above requirement, the embodiments of the present application also provide a new type of guyed tower 1. The guyed tower 1 includes a tower body 10, a connecting assembly 20 and a guyed assembly 30. A guy 31 of the guyed assembly 30 is connected to the tower body 10 through the connecting assembly 20, so that it can meet the requirement of the connection between the guy 31 and the tower body 10, and it is easy to connect and convenient to replace and maintain the connecting assembly.

In some optional embodiments, the tower body 10 includes a plurality of tower tube sections 11 arranged to be stacked with one another, end flanges 111 are arranged at two ends of each of the tower tube sections 11 in an axial direction X respectively, and the end flanges 111 of two adjacent tower tube sections 11 are connected by a fastener. The guyed assembly 30 includes two or more guys 31 distributed to be spaced from one another in the circumferential direction Y The connecting assembly 20 is arranged between two adjacent tower tube sections 11; the connecting assembly 20 includes two or more connecting devices 21 distributed in sequence in a circumferential direction Y of the tower tube sections 11. The number of the guys 31 included in the guyed assembly 30 may be the same as the number of the connecting devices 21 included in the connecting assembly 20.

In order to better meet the requirement of the connection between the guys 31 and the tower body 10, a new type of connecting device 21 is also provided by the embodiments of the present application. The connecting device 21 can be separately produced, sold etc. as an independent component, and of course, can also be used for the guyed tower 1 as a part of the guyed tower 1.

Optionally, please continue to refer to Fig. 2 and Fig. 3, the connecting device 21 includes a fixing portion 211 and a mounting portion 222. The fixing portion 211 has a predetermined length and a predetermined thickness. The mounting portion 222 and the fixing portion 211 are arranged successively. The mounting portion 222 is specifically arranged at an end of the fixing portion 211 in a length direction M of the fixing portion 211 and intersects with the fixing portion 211. The mounting portion 222 has a mounting position 222c. When the connecting device 21 is used for the guyed tower 1 and is used as an assembly part of the guyed tower 1, the length direction M of the fixing portion 211 of the connecting device 21 is consistent with a radial direction Z of the tower tube sections 11, that is, the fixing portion 211 extends along the radial direction Z of the tower tube sections 11. The fixing portion 211 and the mounting portion 222 are distributed successively in the radial direction Z of the tower tube sections 11. The mounting portion 222 protrudes from an outer peripheral face of the tower body 10. Two adjacent end flanges 111 together clamp and hold at least part of the fixing portion 211 and are detachably connected to the fixing portion 211.

An end of each of guys 31 is connected to one of the connecting devices 21 through the mounting position 222c and the other end is used to connect a base. Optionally, the other end of each of the guys 31 extending in a direction away from the mounting position 222c may be specifically connected to the wind power generator base 2. Of course, it is also possible to connect with a guyed base which is arranged separately.

In an optional embodiment, the fixing portion 211 is provided with a first connecting hole 211c penetrating in a thickness direction N of its own, the first connecting hole is used to be connected with the tower body 10. When the connecting device 21 is applied to the guyed tower 1, the thickness direction N of the connecting device is consistent with the axial direction X of the tower tube sections 11, the first connecting hole 211c is formed facing to one of the flange holes 111a of the end flanges 111 in the axial direction X of the tower tube sections 11, and the first connecting hole and the flange hole is connected with each other by the fastener, so that the fixing portion 211 is detachably connected to the tower body 10, so as to restrict the movement of the fixing portion 211 in the radial direction Z of the tower tube sections 11, thereby satisfying the connection requirement, ensuring the connection strength, and enabling to replace and maintain the connecting device 21 easily.

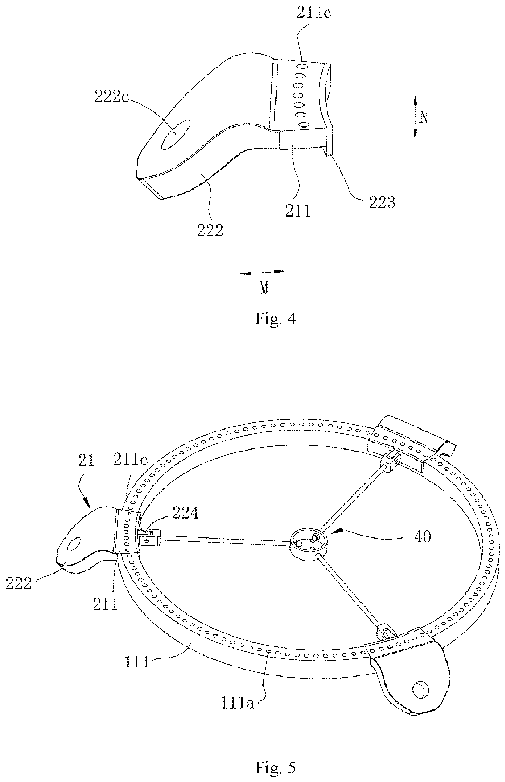

Referring to Fig. 4, in an optional embodiment, the connecting device 21 may further include a position-restricting portion 223. The position-restricting portion 223 is arranged at the other end of the fixing portion 211 in the length direction M. The position-restricting portion 223 and the mounting portion 222 are arranged opposite to each other in the length direction M of the connecting device 21. The position-restricting portion 223 protrudes from the fixing portion 211 in the thickness direction N of the fixing portion 211, that is, the position-restricting portion 223 protrudes from the fixing portion 211 in the radial direction Z of the tower tube sections 11, so that the position-restricting portion 223 can abut against an inner wall face of the tower tube sections 11, also restrict the fixing portion 211 from moving in the radial direction Z of the tower tube sections 11, eliminate a shearing force of the fastener, and ensure the requirement of the connection between the connecting device 21 and the tower body 10, thereby meet the requirement of the connection between the guys 31 and the tower body 10.

In a specific implementation, the connecting device 21 may include both the first connecting hole 211c and the position-restricting portion 223; of course, the connecting device 21 may also include only one of the first connecting hole 211c and the position-restricting portion 223.

In some optional embodiments, the mounting position 222c may be a through hole, an axis of the mounting position intersects with an axis of the first connecting hole 211c, so as to better satisfy the requirement of the connection with the guys 31. Optionally, a protective sleeve may be arranged inside the mounting position 222c, and the protective sleeve may optionally be a stainless steel sliding sleeve. By arranging the protective sleeve, the mounting position 222c and the mounting portion 222 where the mounting position is located can be protected, thereby improving the service life of the connecting device 21 as a whole.

In an optional embodiment, the fixing portion 211 and the mounting portion 222 may be plate bodies respectively. With this arrangement, the overall structure of the connecting device 21 is simple and the cost is low.

Optionally, the fixing portion 211 and the mounting portion 222 may be of an integral structure. With the above arrangement, the connection strength between the fixing portion 211 and the mounting portion 222 can be ensured, the stress concentration at the connecting position between the fixing portion and the mounting portion can be avoided, and moreover, the overall connecting device 21 can be easily formed.

The connecting device 21 as a whole can be forged with high-strength steel Q420 or a higher strength steel material, or cast steel or ductile iron with better performance. The connecting device 21 can also be formed by welding if the load is not large, as long as the reliability of the connecting device 21 can be ensured.

Please continue to refer to Fig. 3 and Fig. 4, in some optional embodiments, in the axial direction X of the tower tube sections 11, that is, in the thickness direction N of the fixing portion 211, the fixing portion 211 includes a first surface 211a and a second surface 211b arranged opposite to each other, the mounting portion 222 includes a third surface 222a and a fourth surface 222b arranged opposite to each other, and the mounting position 222c is a through hole penetrating the third surface 222a and the fourth surface 222b. The first surface 211a and the third surface 222a are arranged to be intersected with each other and form a first angle α, the second surface 211b and the fourth surface 222b are arranged to be intersected with each other and form a second angle β. The first angle α is greater than 0° and less than or equal to 60°, that is, the first angle α may be any value between 0° and 60°, may be any value between 10° and 45°, and further optionally may be 30°.

Optionally, the second angle β may also be greater than 0° and less than or equal to 60°, that is, the second angle β may be any value between 0° and 60°, may be any value between 10° and 45°, and further optionally may be 30°. Some optional specific values of the first angle α and the second angle β may be 25°, 30°, 35°, etc., which can be determined according to an angle between the extension direction of the guys 31 to which the connecting device is connected and the axial direction X of the tower tube sections 11, so that the force provided by the guys 31 can be better transmitted to the tower body 10. In a specific implementation, the second angle β may be the same as the first angle α, or of course, may be different, as long as the requirement of the connection between the guys 31 and the tower body 10 can be better met.

Referring to Fig. 2 to Fig. 6 together, the above embodiments of the present application provide the guyed tower 1. In order to better connect with the connecting device 21 and ensure to meet the requirement of the connection with the connecting device 21, in an optional embodiment, at least one group of surfaces of two end flanges 111 connected with each other facing to each other abut against each other and at least one of the two end flanges 111 is provided with a first opening groove 111b to form an accommodating groove between two adjacent end flanges 111, and the fixing portion 211 is arranged in the accommodating groove.

According to the above arrangement, it is convenient to mount the connecting device 21; and also, since the mounting portion 222 of the connecting device 21 is arranged in the accommodating groove, the two end flanges 111 are arranged against each other, which can improve the stability of the connection between the two adjacent tower tube sections 11. In addition, the sealing requirement of the tower body 10 can be better met. Further, the weight of the tower tube sections 11 above the connecting device 21 will be transferred to each other through the end flanges 111 abutting against each other, and the connecting device 21 will bear no or only a small force, therefore, the service life of the connecting device 21 can be further ensured.

In some optional embodiments, one of two end flanges 111 connected with each other is provided with a first opening groove 111b, the first opening groove 111b may be formed on the lower end flange 111 in the axial direction X of the tower tube sections 11, or the first opening groove 111b may be formed in the upper end flange 111 in the axial direction X; a surface of the other end flange 111 facing to the first opening groove 111b and a wall face enclosing the first opening groove 111b together form an accommodating groove; the accommodating groove can meet the mounting requirement of the fixing portion 211 and also meet the requirement of the two end flanges 111 abutting against each other.

Certainly, in some other examples, the first opening groove 111b may be formed on each of the two end flanges 111 connected with each other, the first opening grooves 111b on the two end flanges 111 can be formed correspondingly, the side walls enclosing the two first opening grooves 111b formed correspondingly together form the accommodating groove, so that it can also meet the mounting requirement of the fixing portion 211. At the same time, according to the arrangement, the two end flanges 111 connected to each other can jointly meet the arrangement requirement of the accommodating groove, and the structural strength of the two end flanges 111 is less affected, and the safety performance of the tower body 10 can be guaranteed.

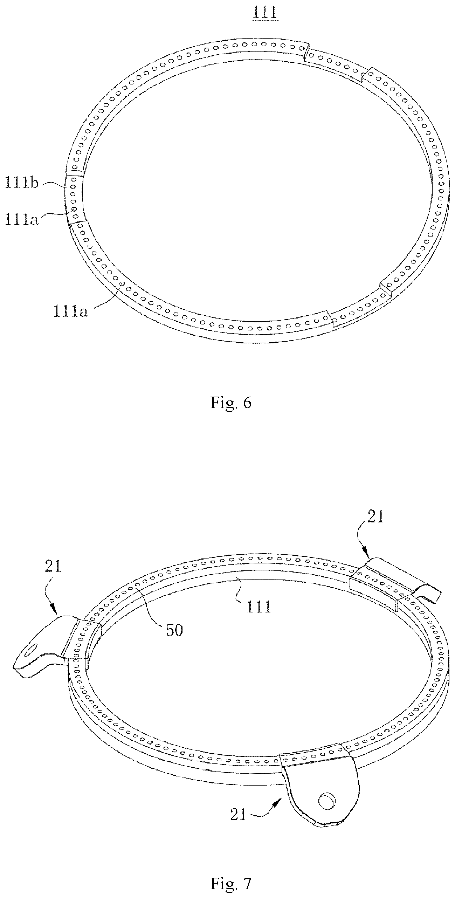

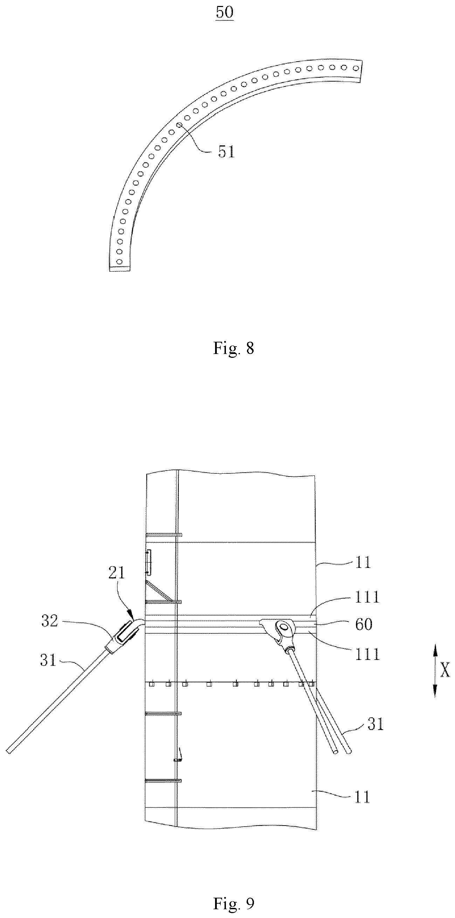

Referring to Fig. 7 and Fig. 8 together, it can be understood that the mounting and maintenance of the connecting device 21 by arranging the first opening grooves 111b on the end flanges 111 is only an optional embodiment, but is not limited to this. In some other examples, at least one group of surfaces of two end flanges 111 connected with each other facing to each other are spaced from each other and form a gap, the fixing portion 211 is located in the gap, and a spacer block 50 is arranged between two adjacent connecting devices 21; in the axial direction X of the tower tube sections 11, a height of the spacer block 50 is equal to or higher than a height of the fixing portion 211, the spacer block 50 is provided with a second connecting hole 51, and the second connecting hole 51 is formed facing to one of flange holes 111a of the end flanges 111 in the axial direction X, and the second connecting hole and the flange hole are connected with each other by the fastener. According to the above arrangement, the mounting of the spacer block 50 between the two adj acent end flanges 111 can be completed on the basis of ensuring the integrity of the two end flanges 111 connected to each other.

At the same time, the arrangement of the spacer block 50 can also improve the stability of the connection between the two adjacent tower tube sections 11. Moreover, the sealing requirement of the tower body 10 can be better met. Further, the weight of each tower tube sections 11 above the connecting device 21 will be transferred between the two end flanges 111 in contact with the spacer block 50 through the spacer block 50, and the connecting device 21 will bear no or only a small force, therefore, the service life of the connecting device 21 can be further ensured.

In the specific implementation, the spacer block 50 may have an arc-shaped block structure, and may optionally be a circular arc-shaped block structure. The number of the second connecting holes 51 on each spacer block 50 can be determined according to the size of the spacer block 50. The number of the second connecting holes 51 can be more than two. When the number is more than two, two or more second connecting holes 51 are formed to be spaced from one another in the circumferential direction Y of the tower tube sections 11, each of the second connecting holes 51 is formed facing to one of the flange holes 111a, and the second connecting hole and the flange hole are connected with each other by the fastener. The number of spacer blocks 50 between two adjacent connecting devices 21 may be one, or two or more of course. The spacer block 50 and the fixing portion 211 of the connecting device 21 are spliced with each other, and together fill the gap between the two adjacent end flanges 111 in the axial direction X, so as to ensure the overall sealing performance of the tower body 10.

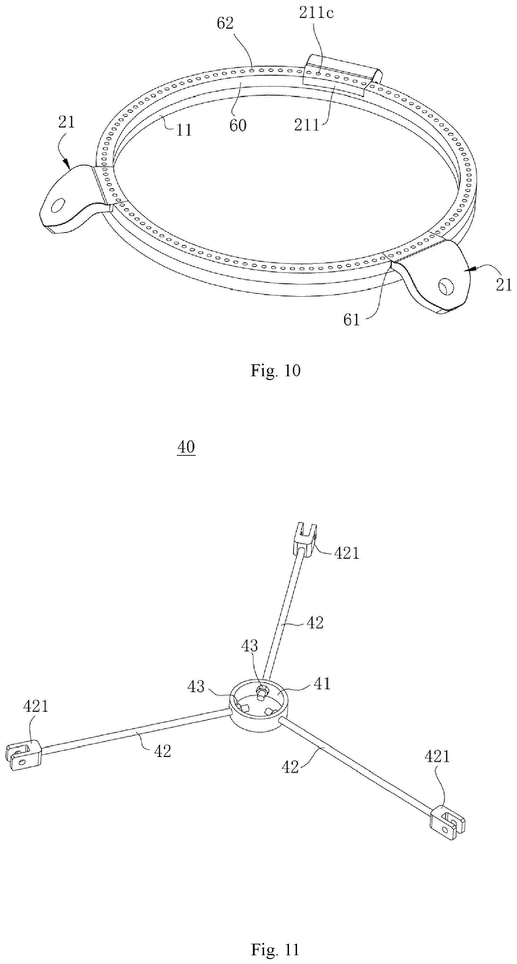

Referring to Fig. 9 and Fig. 10 together, of course, in some other examples, at least one group of surfaces of two end flanges 111 connected with each other facing to each other are spaced from each other and form a gap, an adapter member 60 is arranged in the gap, and a shape of the adapter member 60 matches with a shape of the end flanges 111; one surface of the adapter member 60 facing to the end flanges 111 is provided with a second opening groove 61 to form a mounting groove between the adapter member 60 and one of the end flanges 111, the fixing portion 211 is arranged in the mounting groove, the adapter member 60 is provided with a third connecting hole 62, the third connecting hole 62 is formed facing to one of flange holes 111a of the end flanges 111 in the axial direction X, and the third connecting hole and the flange hole is connected with each other by the fastener. According to the above arrangement, the mounting of the adapter member 60 between the two adj acent end flanges 111 can be completed on the basis of ensuring the integrity of the end flanges 111. At the same time, the arrangement of the adapter member 60 can also improve the stability of the connection between the two adjacent tower tube sections 11.

Optionally, the shape of the adapter member 60 may match with the shape of the end flanges 111, and may be a ring, specifically, may be a circular ring. The number of the third connecting holes 62 may be two or more and are formed in a one-to-one correspondence with the connecting holes on the end flanges 111, and the third connecting holes 62 and the flange holes 111a in the one-to-one correspondence are connected by the fastener. According to the above arrangement, the sealing requirement of the tower body 10 can be better met. Further, the weight of each of the tower tube sections 11 above the connecting device 21 will be transferred between the two end flanges 111 in contact with the adapter member 60 through the adapter member 60, and the connecting device 21 will bear no or only a small force, therefore, the service life of the connecting device 21 can be further ensured.

Referring to Fig. 2 and Fig. 11 together, the guyed tower 1 further includes a reinforcement assembly 40 arranged inside the tower body 10, the reinforcement assembly 40 includes a central fixing member 41 and an anti-deformation member 42 connected with the central fixing member 41, and an end of the anti-deformation member 42 away from the central fixing member 41 is connected to one of the connecting assembly 20 and the tower tube sections 11. By arranging the reinforcement assembly 40 with the above-mentioned structure, when the tensile force of each of the guys 31 of the guyed assembly 30 is relatively large, the tension deformation of the end flanges 111 can be avoided or reduced, and the mounting efficiency and reliability of the guyed tower 1 can be ensured. On the one hand, by adding the above-mentioned structure, the weight of the end flanges 111 of the connecting positions of the guys 31 can be appropriately reduced, and the cost can be reduced, and also, the mounting difficulty caused by the deformation of the end flange 111 tensed by the guys 31 can be prevented.

In an optional embodiment, the central fixing member 41 has a closed ring structure, the anti-deformation member 42 has a strip-like structure extending along the radial direction Z and has a first end and a second end opposite to each other, the first end is connected to the central fixing member 41, the second end is connected to one of the tower body 10 and the connecting assembly 20. The central fixing member 41 and the anti-deformation member 42 are in the form of the above-mentioned structure, which are simple in structure, easy to form, and can better avoid the tensile deformation of the end flanges 111.

Optionally, the number of the anti-deformation members 42 may be two or more and distributed in sequence in the circumferential direction Y of tower tube sections 11, and may optionally be uniformly distributed. By arranging two or more anti-deformation members 42, the deformation of the end flange 111 can be further avoided, and also, the overall force of the tower body 10 can be made more uniformly, so as to ensure the safety performance of the tower body 10.

Optionally, the central fixing member 41 is coaxially arranged with the tower body 10, so that is can ensure the uniformity of the tensile force provided by the reinforcement assembly 40 to the end flanges 111, and better prevent the reinforcement assembly 40 from being deformed. The reinforcement assembly 40 further includes a locking member 43, the first end extends into the central fixing member 41 along the radial direction Z of the tower body 10 and is detachably connected with the locking member 43, and a size of a part of the first end extending into the central fixing member 41 is adjustable. According to the above arrangement, it is convenient for the connection between the anti-deformation member 42 and the central fixing member 41, and also, the size of the anti-deformation member 42 extending into the central fixing member 41 can be adjusted according to the strengthening requirement of the end flanges 111, so as to better meet the requirement of preventing the tensile deforming of the end flanges 111.

In some optional embodiments, the anti-deformation member 42 may be a rigid rod, and in this case, the locking member 43 may be a locking nut, and the locking member 43 is threadedly connected to the first end. Optionally, the rigid rod may specifically be a tension rod, a screw such as a double-ended screw or the like. According to the above arrangement, the tensile force between the anti-deformation member 42 and the end flanges 111 can be changed by screwing the locking member 43. It is only an optional embodiment that the anti-deformation member 42 may adopt the rigid rod. In some other examples, the anti-deformation member 42 can also be a flexible guy, such as a steel wire rope or the like; and in this case, the locking member 43 can use a clamping cap with clamping and fixing function; the locking member 43 is clamped and fixed to the first end of the anti-deformation member 42; the tensile force of the anti-deformation member 42 on the end flanges 111 can be changed by changing the position where the locking member 43 clamps and hold the first end to enter into the central fixing member 41.

Optionally, the central fixing portion 211 may be in a shape of a circular ring. Of course, in some other examples, the central fixing portion 211 may also be in the shape of a triangular ring, a square ring or other polygonal rings, and may be a regular polygonal ring.

Optionally, the second end of the anti-deformation member 42 and one of the connecting device 21 and the tower body 10 can be fixedly connected, for example, by welding. Of course, they also can be connected by a detachable connection method, for example, by a bolt-fastened connection method.

In some other example, the number of the anti-deformation members 42 is the same as the number of the connecting devices 21, the anti-deformation members are arranged in a one-to-one correspondence with the connecting devices, a first connecting member 421 is arranged at the second end of each of the anti-deformation members 42, a second connecting member 224 connected to one of the first connecting members 421 is arranged on each of the connecting devices 21, and the second end is connected to the corresponding connecting device 21 through the first connecting member 421 and the second connecting member 224. According to the above arrangement, it can optimize the reinforcing effect of the reinforcement assembly 40 on the end flanges 111, and also, it may be convenient for the connection of the anti-deformation member 42 between the connecting device 21 and the central fixing member 41.

Since the strength of position where the end flanges 111 are provided with the connecting device 21 is relatively weak, by connecting the anti-deformation member 42 to the connecting device 21, the position where the strength of the end flanges 111 are relatively weak can be strengthened, thereby better avoiding the deformation of the end flanges 111 when the end flanges 111 are subjected to the large external force of the guys 31.

In a specific implementation, the second connecting member 224 can be connected to the fixing portion 211 of the connecting device 21; of course, in the case that the connecting device 21 includes the position-restricting portion 223 , the second connecting member 224 can also be connected to the position-restricting portion 223 of the connecting device 21.

Optionally, the first connecting member 421 and the second connecting member 224 may be detachably connected; one of the first connecting member 421 and the second connecting member 224 may be a protrusion, and the other may be a hinge block structure with an accommodating groove with a shape matching with a shape of the protrusion; the protrusion at least partially enter into the accommodating groove, and is hinged to the accommodating groove through a rotating shaft. The connection method has a simple structure, and enables the anti-deformation member 42 to have a rotational freedom relative to the connecting device 21, which can compensate for the accuracy error during processing or installation, be easy for the connection of the the anti-deformation member 42 between the central fixing member 41 and the connecting device 21, be easy to disassemble and assemble the entire reinforcement assembly 40, and be convenient to replace and maintain the reinforcement assembly 40.

Certainly, it is only an optional method that the first connecting member 421 and the second connecting member 224 are connected by means of the above-mentioned detachable connection. In some other examples, one of the first connecting member 421 and the second connecting member 224 may adopt a hook, and the other may adopt a hanging ring structure hooked with the hook, so that it can also meet the requirement of the detachable connection between the first connecting member and the second connecting member.

It can be understood that, in the above-mentioned embodiments, it takes an example for illustration that the second end of the anti-deformation member 42 is connected with the connecting device 21. In some other examples, the second end can also be connected to the tower body 10, for example, to the end flanges 111, and the connection method between the second end and the end flanges 111 is the same as the connection method between the second end and the connecting device 21, which will not be repeated here.

In a specific embodiment, the anti-deformation members 42 of the reinforcement assembly 40 may be located at a same height in the axial direction X of the tower tube sections 11. Certainly, in some other examples, in the axial direction X of the tower tube sections 11, in the anti-deformation members 42, the heights of at least two anti-deformation members 42 may be different, for example, the second end of one of the anti-deformation members 42 can be connected to the connecting device 21, and the second end of the other anti-deformation member 42 can be connected to the end flange 111 or a tube wall of the tower tube sections 11. One or more than two anti-deformation members 42 in the reinforcement assembly 40 can even be tensed at an angle, as long as the deformation of the end flange 111 toward the tensing direction of the guys 31 can be prevented.

Optionally, please continue to refer to Fig. 2 to Fig. 12, in the above-mentioned embodiments, an end of each of the guys 31 facing to the connecting assembly 20 is provided with a hinged head 32, and the hinge head 32 is hinged with the mounting position 222c. According to the above arrangement, it can meet the requirement of the connection between the guys 31 and the connecting device 21, and can also make the guys 31 have a certain degree of rotational freedom relative to the connecting device 21, and it can be estimated that the force direction of each of the guys needs to be adjusted, so that when the tower body 10 is about to shake under the action of the wind, the uniformity of the tensile force of the whole tower body 10 by the guyed assembly 30 can also be ensured, so as to ensure the ability of the whole guyed tower 1 to resist wind energy, and to ensure the stability and reliability of the guyed tower 1.

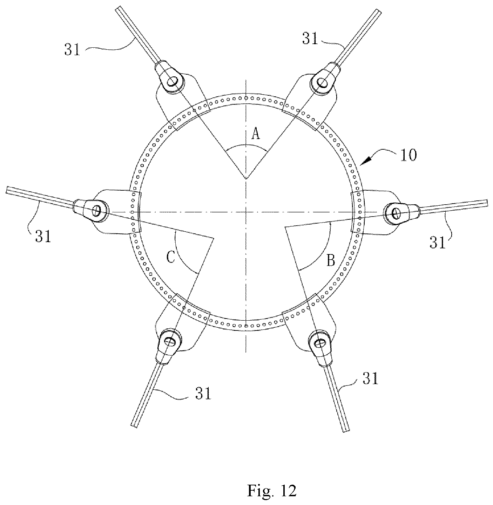

Referring to Fig. 12, optionally, the number of guys 31 included in the guyed tower 1 may be three, but not limited to three. When the number of the guys 31 is greater than three, the force direction of each of the guys31 may intersect with the extension direction of a center line of the tower body 10; however, it needs to be considered that the tower can increase the strength of the tower body 10 below the position of the guys 31, which can resist the torsional moment of the wind power generator set in the direction of the center line of the tower body 10; when the force directions of the guys 31 passes through the center line of the tower body 10, the guys 31 have no resistance to the torsional moment of a power generator around the center line of the tower; if the strength of a tube body under the position of the guys 31 is increased, which cannot resist the torsional moment of the power generator around the center line of the tower, the force directions of a plurality of guys 31 cannot intersect with the center line of the tower body 10; the force direction of each of the guys needs to be at an angle with the center line of the tower body 10, that is , in some optional examples, it is required that the force direction of at least one of the guys 31 does not intersect with the extension direction of the center line of the tower body 10, so as to resist the effect of the torsional moment of the power generator around the center line of the tower; optionally, the "not intersect" may be a non-intersecting in a space, and the force directions of other guys 31 may intersect with the extending direction of the center line of the tower body 10, of course, the force directions of other guys may not intersect with the extending direction of the center line of the tower body.

Please continue to refer to Fig. 12, optionally, among the plurality of guys 31 of the guyed tower 1, every two guys 31 can be grouped together, and the angles between the force directions of two guys 31 in the groups are A, B, and C. The values of the angles A, B, and C may be the same, or of course, may be different, and may be specifically determined according to the number of the guys 31 and the strength requirement of the guyed tower 1.

Optionally, the guys 31 included in the guyed tower 1 may be multi-layered in the axial direction X, that is, the guyed assemblies 30 are not limited to be arranged on the same layer. In the case that the guys 31 are multi-layered, that is, when the number of guyed assemblies 30 is two or more, and two or more guyed assemblies 30 are arranged to be spaced from one another in the axial direction X of the tower tube sections 11, it is also necessary to consider the effect of the torsional moment of the wind power generator set in the direction around the center line of the tower body 10. At the beginning of the design, it has been considered that the tower body 10 itself can resist the torsional moment of the wind power generator on the tower body 10 below the position of the guys 31, so that the force directions of the guys 31 can pass through the center line of the tower body 10. If the tower body 10 itself cannot resist the torsional moment acting on the tower body 10 by the wind power generator set at the beginning of the design, the force directions of the plurality of guys 31 cannot all intersect with the center line of the tower body 10; the force directions of at least two guys 31 do not intersect with the extension direction of the center line of the tower body 10, so as to resist the torsional moment acting on the tower body 10 by the wind power generator.

Therefore, the connecting device 21 provided by the embodiments of the present application includes the fixing portion 211, the mounting portion 222 and the position-restricting portion 223, the fixing portion 211 has a predetermined length and thickness, and the fixing portion 211 is provided with the first connecting hole 211c penetrating in the thickness direction N of its own, so that when the connecting device 21 is applied to the guyed tower 1 as a part of the guyed tower, at least part of the fixing portion 211 can be clamped and held between two adjacent end flanges 111 of the tower body 10, and the first connecting hole 211c and the flange hole 111a are connected by the fastener, so as to meet the requirement of the connection between each connecting device 21 of the connection assembly 20 and the tower body 10, facilitate the connection, replacement and maintenance between each connection device 21 and the tower body 10. The position-restricting portion 223 arranged correspondingly has the position-restricting function to ensure the reliability of the connection between the connecting device 21 and the end flanges 111.

In the case that the connecting device 21 is applied to the guyed tower 1, the mounting portion 222 can protrude from the outer peripheral face of the tower tube sections 11 and be connected to each of the guys 31 through the mounting position 222c, so that the connecting device 21 provided by the embodiments of the present application can meet the requirement the connection between the guys 31 and the tower body 10. Moreover, the connecting device 21 also has the advantages of simple structure, small volume, convenient transportation, does not affect the overall weight of the tower, easy to manufacture and mount, and can further optimize the performance of the guyed tower 1 .

The guyed tower 1 and the wind power generator set provided by the embodiments of the present application include the connecting assembly 20, and the connecting assembly 20 includes more than two connecting devices 21 in the above-mentioned embodiments, which can meet the requirement of the connection between the guys of the guyed assembly 30 and the tower body 10, and facilitate the connection, replacement and maintenance between the connecting devices 21 and the tower body 10. For the tower body 10 itself, the structural change is small; the connecting device 21, the spacer block 50 and the adapter member 60 can be universal, and only a part of a processing portion needs to be adjusted to reduce the cost; for some stock wind power generator set, the transition connection on flanges can be used to ensure that the modified type of the tower body does not need to be returned to the factory for modification, and the guys 31 can be directly added on the existing basis to ensure the economy of the modification project, which is conducive to the comprehensive promotion of the guyed tower 1, thereby improving the economic benefits of the wind power generator set.

Although the present application has been described with reference to the preferred embodiments, various modifications may be made and equivalents may be substituted for parts of the embodiments without departing from the scope of the present invention as described by the appended claims.

## Claims

1. A guyed tower (1), comprising
a tower body (10), comprising a plurality of tower tube sections (11) arranged to be stacked with one another, wherein end flanges (111) are arranged at two ends of each of the tower tube sections (11) in an axial direction (X) respectively, and the end flanges (111) of two adjacent tower tube sections (11) are connected by a fastener;
a connecting assembly (20), arranged between two adjacent tower tube sections (11), wherein the connecting assembly (20) comprises two or more connecting devices (21) distributed in sequence in a circumferential direction (Y) of the tower tube sections (11), each of the connecting devices (21) comprises a fixing portion (211) and a mounting portion (222) that are successively distributed and intersected with each other in a radial direction (Z) of the tower tube sections (11), two adjacent end flanges (111) together clamp and hold at least part of the fixing portion (211) and are detachably connected to the fixing portion (211), and the mounting portion (222) protrudes from an outer peripheral face of the tower body (10) and has a mounting position (222c);
a guyed assembly (30), comprising two or more guys (31) distributed to be spaced from one another in the circumferential direction (Y), one end of each of the guys (31) is connected to one of the connecting devices (21) through the mounting position (222c), and the other end is used to connect a base;
**characterized in that**
the guyed tower (1) further comprises a reinforcement assembly (40) arranged inside the tower body (10), the reinforcement assembly (40) comprises a central fixing member (41) and an anti-deformation member (42) connected with the central fixing member (41), and an end of the anti-deformation member (42) away from the central fixing member (41) is connected to one of the connecting assembly (20) and the tower tube sections (11).

2. The guyed tower (1) according to claim 1, wherein the fixing portion (211) and the mounting portion (222) are plate bodies respectively, and the fixing portion (211) and the mounting portion (222) are of an integral structure.

3. The guyed tower (1) according to claim 2, wherein in the axial direction (X), the fixing portion (211) comprises a first surface (211a) and a second surface (211b) arranged opposite to each other, the mounting portion (222) comprises a third surface (222a) and a fourth surface (222b) arranged opposite to each other, and the mounting position (222c) is a through hole penetrating the third surface (222a) and the fourth surface (222b);
the first surface (211a) and the third surface (222a) are arranged to be intersected with each other and form a first angle, the second surface (211b) and the fourth surface (222b) are arranged to be intersected with each other and form a second angle, the first angle is greater than 0° and less than or equal to 60°, and/or the second angle is greater than 0° and less than or equal to 60°.

4. The guyed tower (1) according to claim 1, wherein each of the connecting devices (21) further comprises a position-restricting portion (223), the position-restricting portion (223) is arranged at an end of the fixing portion (211) away from the mounting portion (222) in the radial direction (Z), and the position-restricting portion (223) extends along the axial direction (X) and protrudes from the fixing portion (211);
and/or the fixing portion (211) is provided with a first connecting hole (211c), the first connecting hole (211c) is formed facing to one of flange holes (111a) of the end flanges (111) in the axial direction (X), and the first connecting hole and the flange hole is connected with each other by the fastener.

5. The guyed tower (1) according to claim 1, wherein at least one group of surfaces of two end flanges (111) connected with each other facing to each other abut against each other and at least one of the two end flanges (111) is provided with a first opening groove (111b) to form an accommodating groove between two adjacent end flanges (111), the fixing portion (211) is arranged in the accommodating groove.

6. The guyed tower (1) according to claim 1, wherein at least one group of surfaces of two end flanges (111) connected with each other facing to each other are spaced from each other and form a gap, the fixing portion (211) is located in the gap, and a spacer block (50) is arranged between two adjacent connecting devices (21);
in the axial direction (X), a height of the spacer block (50) is equal to or higher than a height of the fixing portion (211), the spacer block (50) is provided with a second connecting hole (51), and the second connecting hole (51) is formed facing to one of flange holes (111a) of the end flanges (111) in the axial direction (X), and the second connecting hole and the flange hole are connected with each other by the fastener.

7. The guyed tower (1) according to claim 1, wherein at least one group of surfaces of two end flanges (111) connected with each other facing to each other are spaced from each other and form a gap, an adapter member (60) is arranged in the gap, and a shape of the adapter member (60) matches with a shape of the end flanges (111);
one surface of the adapter member (60) facing to the end flanges (111) is provided with a second opening groove (61) to form a mounting groove between the adapter member (60) and one of the end flanges (111), the fixing portion (211) is arranged in the mounting groove, the adapter member (60) is provided with a third connecting hole (62), the third connecting hole (62) is formed facing to one of flange holes (111a) of the end flanges (111) in the axial direction (X), and the third connecting hole and the flange hole are connected with each other by the fastener.

8. The guyed tower (1) according to claim 1, wherein the central fixing member (41) has a closed ring structure, the anti-deformation member (42) has a strip-like structure extending along the radial direction (Z) and has a first end and a second end opposite to each other, the first end is connected to the central fixing member (41), the second end is connected to one of the tower body (10) and the connecting assembly (20), and the number of the anti-deformation members (42) is two or more and distributed in sequence in the circumferential direction (Y).

9. The guyed tower (1) according to claim 8, wherein the central fixing member (41) is coaxially arranged with the tower body (10);
the reinforcement assembly (40) further comprises a locking member (43), the first end extends into the central fixing member (41) along the radial direction (Z) and is detachably connected with the locking member (43), and a size of a part of the first end extending into the central fixing member (41) is adjustable.

10. The guyed tower (1) according to claim 8, wherein the number of the anti-deformation members (42) is the same as the number of the connecting devices (21), the anti-deformation members are arranged in a one-to-one correspondence with the connecting devices, a first connecting member (421) is arranged at the second end of each of the anti-deformation members (42), a second connecting member (224) connected to one of the first connecting members (421) is arranged on each of the connecting devices (21), and the second end is connected to the corresponding connecting device (21) through the first connecting member (421) and the second connecting member (224).

11. The guyed tower (1) according to any one of claims 1-7, wherein an end of each of the guys (31) facing to the connecting assembly (20) is provided with a hinged head (32), and the hinge head (32) is hinged with the mounting position (222c).

12. The guyed tower (1) according to any one of claims 1-7, wherein a force direction of at least one of the guys (31) does not intersect with an extension direction of a center line of the tower body (10).

13. A wind power generator set, comprising the guyed tower (1) according to any one of claims 1-12.

## Patentansprüche

1. Abgespannter Turm (1), umfassend
einen Turmkörper (10), der eine Vielzahl von Turmrohrabschnitten (11) umfasst, die so angeordnet sind, dass sie miteinander gestapelt sind, wobei Endflansche (111) an zwei Enden jedes der Turmrohrabschnitte (11) jeweils in einer axialen Richtung (X) angeordnet sind, und die Endflansche (111) von zwei benachbarten Turmrohrabschnitten (11) durch ein Befestigungsmittel verbunden sind;
eine Verbindungsanordnung (20), die zwischen zwei benachbarten Turmrohrabschnitten (11) angeordnet ist, wobei die Verbindungsanordnung (20) zwei oder mehr Verbindungsvorrichtungen (21) umfasst, die nacheinander in einer Umfangsrichtung (Y) der Turmrohrabschnitte (11) verteilt sind, wobei jede der Verbindungsvorrichtungen (21) einen Befestigungsabschnitt (211) und einen Montageabschnitt (222) umfasst, die nacheinander in einer radialen Richtung (Z) der Turmrohrabschnitte (11) verteilt sind und sich gegenseitig schneiden, zwei benachbarte Endflansche (111) zusammen zumindest einen Teil des Befestigungsabschnitts (211) klemmen und halten und mit dem Befestigungsabschnitt (211) lösbar verbunden sind, und der Montageabschnitt (222) von einer äußeren Umfangsfläche des Turmkörpers (10) absteht und eine Montageposition (222c) aufweist;
eine Abspannanordnung (30), die zwei oder mehr Abspannungen (31) umfasst, die so verteilt sind, dass sie in der Umfangsrichtung (Y) voneinander beabstandet sind, wobei ein Ende jeder der Abspannungen (31) über die Montageposition (222c) mit einer der Verbindungsvorrichtungen (21) verbunden ist und das andere Ende zum Verbinden einer Basis verwendet wird;
**dadurch gekennzeichnet, dass**
der abgespannte Turm (1) ferner eine Verstärkungsanordnung (40) umfasst, die im Inneren des Turmkörpers (10) angeordnet ist, wobei die Verstärkungsanordnung (40) ein zentrales Befestigungselement (41) und ein Antiverformungselement (42) umfasst, das mit dem zentralen Befestigungselement (41) verbunden ist, und ein Ende des Antiverformungselements (42), das von dem zentralen Befestigungselement (41) entfernt ist, mit einem der Verbindungsanordnung (20) oder des Turmrohrabschnitts (11) verbunden ist.

2. Abgespannter Turm (1) nach Anspruch 1, wobei der Befestigungsabschnitt (211) und der Montageabschnitt (222) jeweils Plattenkörper sind und der Befestigungsabschnitt (211) und der Montageabschnitt (222) eine integrale Struktur aufweisen.

3. Abgespannter Turm (1) nach Anspruch 2, wobei in der axialen Richtung (X) der Befestigungsabschnitt (211) eine erste Oberfläche (211a) und eine zweite Oberfläche (211b) umfasst, die einander gegenüberliegend angeordnet sind, der Befestigungsabschnitt (222) eine dritte Oberfläche (222a) und eine vierte Oberfläche (222b) umfasst, die einander gegenüberliegend angeordnet sind, und die Montageposition (222c) ein Durchgangsloch ist, das die dritte Oberfläche (222a) und die vierte Oberfläche (222b) durchdringt;
die erste Oberfläche (211a) und die dritte Oberfläche (222a) so angeordnet sind, dass sie sich miteinander schneiden und einen ersten Winkel bilden, die zweite Oberfläche (211b) und die vierte Oberfläche (222b) so angeordnet sind, dass sie sich miteinander schneiden und einen zweiten Winkel bilden, der erste Winkel größer als 0° und kleiner oder gleich 60° ist und/oder der zweite Winkel größer als 0° und kleiner oder gleich 60° ist.

4. Abgespannter Turm (1) nach Anspruch 1, wobei jede der Verbindungsvorrichtungen (21) ferner einen Positionsbeschränkungsabschnitt (223) umfasst, wobei der Positionsbeschränkungsabschnitt (223) an einem Ende des Befestigungsabschnitts (211) entfernt von dem Montageabschnitt (222) in der radialen Richtung (Z) angeordnet ist, und wobei sich der Positionsbeschränkungsabschnitt (223) entlang der axialen Richtung (X) erstreckt und von dem Befestigungsabschnitt (211) vorsteht;
und/oder der Befestigungsabschnitt (211) mit einem ersten Verbindungsloch (211c) versehen ist, das erste Verbindungsloch (211c) einem der Flanschlöcher (111a) der Endflansche (111) zugewandt in der axialen Richtung (X) ausgebildet ist und das erste Verbindungsloch und das Flanschloch durch das Befestigungsmittel miteinander verbunden sind.

5. Abgespannter Turm (1) nach Anspruch 1, wobei mindestens eine Gruppe von Oberflächen zweier miteinander verbundener, einander zugewandter Endflansche (111) aneinander stoßen und mindestens einer der beiden Endflansche (111) mit einer ersten Öffnungsnut (111b) versehen ist, um eine Aufnahmenut zwischen zwei benachbarten Endflanschen (111) zu bilden, wobei der Befestigungsabschnitt (211) in der Aufnahmenut angeordnet ist.

6. Abgespannter Turm (1) nach Anspruch 1, wobei mindestens eine Gruppe von Oberflächen zweier miteinander verbundener, einander zugewandter Endflansche (111) voneinander beabstandet sind und einen Spalt bilden, der Befestigungsabschnitt (211) sich in dem Spalt befindet und zwischen zwei benachbarten Verbindungseinrichtungen (21) ein Abstandshalterblock (50) angeordnet ist;
in der axialen Richtung (X) eine Höhe des Abstandshalterblocks (50) gleich oder höher als eine Höhe des Befestigungsabschnitts (211) ist, der Abstandshalterblock (50) mit einem zweiten Verbindungsloch (51) versehen ist, und das zweite Verbindungsloch (51) so ausgebildet ist, dass es einem der Flanschlöcher (111a) der Endflansche (111) in der axialen Richtung (X) zugewandt ist, und das zweite Verbindungsloch und das Flanschloch durch das Befestigungsmittel miteinander verbunden sind.

7. Abgespannter Turm (1) nach Anspruch 1, wobei mindestens eine Gruppe von Oberflächen zweier miteinander verbundener, einander zugewandter Endflansche (111) voneinander beabstandet sind und einen Spalt bilden, ein Adapterelement (60) in dem Spalt angeordnet ist und eine Form des Adapterelements (60) mit einer Form der Endflansche (111) übereinstimmt;
eine Oberfläche des Adapterelements (60), die den Endflanschen (111) zugewandt ist, mit einer zweiten Öffnungsnut (61) versehen ist, um eine Montagenut zwischen dem Adapterelement (60) und einem der Endflansche (111) zu bilden, wobei der Befestigungsabschnitt (211) in der Montagenut angeordnet ist, das Adapterelement (60) mit einem dritten Verbindungsloch (62) versehen ist, das dritte Verbindungsloch (62) einem der Flanschlöcher (111a) der Endflansche (111) zugewandt in der axialen Richtung (X) ausgebildet ist und das dritte Verbindungsloch und das Flanschloch durch das Befestigungsmittel miteinander verbunden sind.

8. Abgespannter Turm (1) nach Anspruch 1, wobei das zentrale Befestigungselement (41) eine geschlossene Ringstruktur aufweist, das Antiverformungselement (42) eine streifenförmige Struktur aufweist, die sich entlang der radialen Richtung (Z) erstreckt und ein erstes Ende und ein zweites Ende aufweist, die einander gegenüberliegen, das erste Ende mit dem zentralen Befestigungselement (41) verbunden ist, das zweite Ende mit einem des Turmkörpers (10) oder der Verbindungsanordnung (20) verbunden ist, und die Anzahl der Antiverformungselemente (42) zwei oder mehr beträgt und in der Umfangsrichtung (Y) in Folge verteilt ist.

9. Abgespannter Turm (1) nach Anspruch 8, wobei das zentrale Befestigungselement (41) koaxial mit dem Turmkörper (10) angeordnet ist;
die Verstärkungsanordnung (40) ferner ein Verriegelungselement (43) umfasst, das erste Ende sich in das zentrale Befestigungselement (41) entlang der radialen Richtung (Z) erstreckt und lösbar mit dem Verriegelungselement (43) verbunden ist, und eine Größe eines Teils des ersten Endes, das sich in das zentrale Befestigungselement (41) erstreckt, einstellbar ist.

10. Abgespannter Turm (1) nach Anspruch 8, wobei die Anzahl der Antiverformungselemente (42) gleich der Anzahl der Verbindungsvorrichtungen (21) ist, die Antiverformungselemente in einer Eins-zu-Eins-Entsprechung mit den Verbindungsvorrichtungen angeordnet sind, ein erstes Verbindungselement (421) am zweiten Ende jedes der Antiverformungselemente (42) angeordnet ist, ein zweites Verbindungselement (224), das mit einem der ersten Verbindungselemente (421) verbunden ist, an jeder der Verbindungsvorrichtungen (21) angeordnet ist, und das zweite Ende mit der entsprechenden Verbindungsvorrichtung (21) durch das erste Verbindungselement (421) und das zweite Verbindungselement (224) verbunden ist.

11. Abgespannter Turm (1) nach einem der Ansprüche 1 bis 7, wobei ein Ende jeder der Abspannungen (31), das der Verbindungsanordnung (20) zugewandt ist, mit einem angelenkten Ko0f (32) versehen ist und der angelenkte Kopf (32) mit der Montageposition (222c) gelenkig verbunden ist.

12. Abgespannter Turm (1) nach einem der Ansprüche 1 bis 7, wobei sich eine Kraftrichtung mindestens einer der Abspannungen (31) nicht mit einer Erstreckungsrichtung einer Mittellinie des Turmkörpers (10) schneidet.

13. Windkraftanlage, umfassend einen abgespannten Turm (1) nach einem der Ansprüche 1 bis 12.

## Revendications

1. Mât haubané (1), comprenant
un corps de mât (10), comprenant plusieurs sections de tube de mât (11) disposées pour être empilées les unes avec les autres, dans lequel des brides d'extrémité (111) sont disposées à deux extrémités de chacune des sections de tube de mât (11) dans une direction axiale (X) respectivement, et les brides d'extrémité (111) de deux sections de tube de mât adjacentes (11) sont reliées par un élément de fixation ;
un ensemble de liaison (20) disposé entre deux sections de tube de mât adjacentes (11), dans lequel l'ensemble de liaison (20) comprend deux ou plusieurs dispositifs de liaison (21) répartis en séquence dans une direction circonférentielle (Y) des sections de tube de mât (11), chacun des dispositifs de liaison (21) comprend une partie de fixation (211) et une partie de montage (222) qui sont successivement réparties et se croisent dans une direction radiale (Z) des sections de tube de mât (11), deux brides d'extrémité adjacentes (111) serrent et maintiennent ensemble au moins une partie de la partie de fixation (211) et sont reliées de manière amovible à la partie de fixation (211), et la partie de montage (222) fait saillie à partir d'une face périphérique extérieure du corps de mât (10) et a une position de montage (222c) ;
un ensemble haubané (30) comprenant deux ou plusieurs haubans (31) répartis de manière à être espacés les uns des autres dans la direction circonférentielle (Y), une extrémité de chacun des haubans (31) étant reliée à l'un des dispositifs de liaison (21) par la position de montage (222c), et l'autre extrémité étant utilisée pour relier une base ;
**caractérisé en ce que**
le mât haubanée (1) comprend en outre un ensemble de renforcement (40) disposé à l'intérieur du corps de mât (10), l'ensemble de renforcement (40) comprend un élément de fixation central (41) et un élément anti-déformation (42) relié à l'élément de fixation central (41), et une extrémité de l'élément anti-déformation (42) éloignée de l'élément de fixation central (41) est reliée à l'un des ensembles de liaison (20) et aux sections de tube du mât (11).

2. Mât haubané (1) selon la revendication 1, dans lequel la partie de fixation (211) et la partie de montage (222) sont respectivement des corps de plaque, et la partie de fixation (211) et la partie de montage (222) sont d'une structure intégrale.

3. Mât haubané (1) selon la revendication 2, dans lequel, dans la direction axiale (X), la partie de fixation (211) comprend une première surface (211a) et une deuxième surface (211b) opposées l'une à l'autre, la partie de montage (222) comprend une troisième surface (222a) et une quatrième surface (222b) opposées l'une à l'autre, et la position de montage (222c) est un trou traversant la troisième surface (222a) et la quatrième surface (222b) ;
la première surface (211a) et la troisième surface (222a) sont disposées de manière à se croiser et à former un premier angle, la deuxième surface (211b) et la quatrième surface (222b) sont disposées de manière à se croiser et à former un deuxième angle, le premier angle étant supérieur à 0° et inférieur ou égal à 60°, et/ou le deuxième angle est supérieur à 0° et inférieur ou égal à 60°.

4. Mât haubané (1) selon la revendication 1, dans lequel chacun des dispositifs de liaison (21) comprend en outre une partie limitant la position (223), la partie limitant la position (223) est disposée à une extrémité de la partie de fixation (211) éloignée de la partie de montage (222) dans la direction radiale (Z), et la partie limitant la position (223) s'étend le long de la direction axiale (X) et fait saillie par rapport à la partie de fixation (211) ;
et/ou la partie de fixation (211) est pourvue d'un premier trou de liaison (211c), le premier trou de liaison (211c) est formé face à l'un des trous de bride (111a) des brides d'extrémité (111) dans la direction axiale (X), et le premier trou de liaison et le trou de bride sont reliés l'un à l'autre par l'élément de fixation.

5. Mât haubané (1) selon la revendication 1, dans lequel au moins un groupe de surfaces de deux brides d'extrémité (111) reliées l'une à l'autre et faisant face l'une à l'autre sont en butée l'une contre l'autre et au moins l'une des deux brides d'extrémité (111) est pourvue d'une première rainure d'ouverture (111b) pour former une rainure de logement entre deux brides d'extrémité adjacentes (111), la partie de fixation (211) est disposée dans la rainure de logement.

6. Mât haubané (1) selon la revendication 1, dans lequel au moins un groupe de surfaces de deux brides d'extrémité (111) reliées l'une à l'autre et faisant face l'une à l'autre sont espacées l'une de l'autre et forment un espace, la partie de fixation (211) est située dans l'espace, et un bloc d'espacement (50) est disposé entre deux dispositifs de liaison adjacents (21) ;
dans la direction axiale (X), une hauteur du bloc d'espacement (50) est égale ou supérieure à une hauteur de la partie de fixation (211), le bloc d'espacement (50) est pourvu d'un deuxième trou de liaison (51), et le deuxième trou de liaison (51) est formé face à l'un des trous de bride (111a) des brides d'extrémité (111) dans la direction axiale (X), et le deuxième trou de liaison et le trou de bride sont reliés l'un à l'autre par l'élément de fixation.

7. Mât haubané (1) selon la revendication 1, dans lequel au moins un groupe de surfaces de deux brides d'extrémité (111) reliées l'une à l'autre et faisant face l'une à l'autre sont espacées l'une de l'autre et forment un espace, un élément adaptateur (60) est disposé dans l'espace, et une forme de l'élément adaptateur (60) correspond à une forme des brides d'extrémité (111) ;
une surface de l'élément adaptateur (60) faisant face aux brides d'extrémité (111) est pourvue d'une deuxième rainure d'ouverture (61) pour former une rainure de montage entre l'élément adaptateur (60) et l'une des brides d'extrémité (111), la partie de fixation (211) est disposée dans la rainure de montage, l'élément adaptateur (60) est pourvu d'un troisième trou de liaison (62), le troisième trou de liaison (62) est formé face à l'un des trous de bride (111a) des brides d'extrémité (111) dans la direction axiale (X), et le troisième trou de liaison et le trou de bride sont reliés l'un à l'autre par l'élément de fixation.

8. Mât haubané (1) selon la revendication 1, dans lequel l'élément de fixation central (41) a une structure en anneau fermé, l'élément anti-déformation (42) a une structure en forme de bande s'étendant le long de la direction radiale (Z) et a une première extrémité et une deuxième extrémité opposées l'une à l'autre, la première extrémité est reliée à l'élément de fixation central (41), la deuxième extrémité est reliée à l'un des corps de mât (10) et à l'ensemble de liaison (20), et le nombre d'éléments anti-déformation (42) est de deux ou plus et distribués en séquence dans la direction circonférentielle (Y).

9. Mât haubané (1) selon la revendication 8, dans lequel l'élément de fixation central (41) est disposé coaxialement avec le corps de mât (10) ;
l'ensemble de renforcement (40) comprend en outre un élément de verrouillage (43), la première extrémité s'étend dans l'élément de fixation central (41) le long de la direction radiale (Z) et est reliée de manière amovible à l'élément de verrouillage (43), et une taille d'une partie de la première extrémité s'étendant dans l'élément de fixation central (41) est réglable.

10. Mât haubané (1) selon la revendication 8, dans lequel le nombre d'éléments anti-déformation (42) est le même que le nombre de dispositifs de liaison (21), les éléments anti-déformation sont disposés en correspondance biunivoque avec les dispositifs de liaison, un premier élément de liaison (421) est disposé à la deuxième extrémité de chacun des éléments anti-déformation (42), un deuxième élément de liaison (224) relié à l'un des premiers éléments de liaison (421) est disposé sur chacun des dispositifs de liaison (21), et la deuxième extrémité est reliée au dispositif de liaison correspondant (21) par l'intermédiaire du premier élément de liaison (421) et du deuxième élément de liaison (224).

11. Mât haubané (1) selon l'une quelconque des revendications 1 à 7, dans lequel une extrémité de chacun des haubans (31) faisant face à l'ensemble de liaison (20) est pourvue d'une tête articulée (32), et la tête articulée (32) est articulée avec la position de montage (222c).

12. Mât haubané (1) selon l'une des revendications 1 à 7, dans lequel une direction de force d'au moins un des haubans (31) ne croise pas une direction d'extension d'une ligne centrale du corps de mât (10).

13. Ensemble générateur éolien comprenant le mât haubané (1) selon l'une des revendications 1 à 12.
